# EUROPEAN PATENT SPECIFICATION

(11) **EP 1 235 754 B1**
(45) Date of publication and mention of the grant of the patent: **04.06.2003**
(21) Application number: 00954906.4
(22) Date of filing: 23.08.2000
(51) Int. Cl.: C02F 5/00, E02B 7/00

(54) **APPARATUS FOR REMOVING DEPOSITS AND/OR POLLUTANS FROM WATER**
VORRICHTUNG ZUR ENTFERNUNG VON ABLAGERUNGEN UND/ODER VERUNREINIGUNGEN AUS WASSER
APPAREIL SERVANT A ELIMINER LE DEPOT ET/OU LES POLLUANTS DE L'EAU

(30) Priority: 07.12.1999 IT DA990212 U
(43) Date of publication of application: 04.09.2002
(73) Proprietor: Autovie Venete S.P.A., 34129 Trieste (IT)
(72) Inventor: CANDIDI TOMMASI CRUDELI, Raoul, I-33100 Udine (IT); CANDIDI TOMMASI CRUDELI, RafDouglas, I-33100 Udine (IT)
(74) Representative: D'Agostini, Giovanni, Dr.
(86) International application number: IT0000347
(87) International publication number: WO01042147

(56) References cited:
- DE-A- 4 200 249
- DE-A- 4 240 057
- US-A- 5 067 850
- US-A- 5 160 036

## Description

### Technical Field

The object of this invention is a system and retentive apparatus for controlling and, if required, for recovering water that has been cleaned of road deposits, under both normal and emergency conditions.

The invention is applied preferably, but not necessarily exclusively, to the roads and highways sector, such as roads and motorways that are subject to natural disasters, particularly heavy rain, but also, and above all, in the event of road accidents that lead to, or provoke, spills of pollutants or toxic or dangerous liquids.

### Background Art

No efficient system is currently available or used in the aforementioned circumstances, apart from traditional drainage systems, such as the type of paving system used or other means for conveying and collecting water.

Examples of drainage recovering systems are disclosed in DE-A-4240057; DE-A-4200249;US-A-5067850; US-A-5160036.

In particular the last one US-A-5160036, discloses an apparatus for containing liquids and pollution within a liquid drainage comprising a first conduit, a second conduit, a liquid barrier, means for lifting, and a means for sensing pollution. The second conduit is smaller in relative diameter than the first conduit and is positioned so that the second conduit outlet end is located within the first conduit. The second conduit has the flexible portion of its length which permits the outlet end of the second conduit to be lifted while the inlet end of the second conduit remains stationary. The liquid barrier guides liquid flow into the second conduit and liquid flow over the top of the liquid barrier and into the first conduit during floods and retains liquid during normal flow when the outlet end of the second conduit is lifted by sensing means detecting pollution, so activating also said outlet end of the second conduit means causing the liquid barrier to retain liquid. The lifting height is adjustable.

### Drawbacks

This type of solution is not able to overcome the problems brought about in emergency situations, such as very heavy rainfall or spillage of pollutants from tankers, for example following a road accident.

### The aim of the invention

The aim of the invention herein described is to overcome the aforementioned problems.

### Essence of the invention

The aforementioned problems are resolved with the features of claim 1. As claimed, by means of an apparatus with a system of separators connected with inflatable sectors, which are activated by a sensor that detects the presence of unacceptable fluid, in order to hold the aforementioned unacceptable liquid in dedicated compartments.

### Advantages of the invention

The advantages of this system are, principally, that the toxic and/or pollutant materials are detected and held in compartments, from where they can be recovered or eliminated, to avoid pollution of the surrounding environment.

### Description of a typical means of applying the system

These and other advantages, with the aid of the attached drawings, will be outlined in the following description of a typical application of the system, although it is not to be considered exhaustive but merely a typical example.

Figures 1 is a three-dimensional view of a disposal system with the apparatus described in this invention.

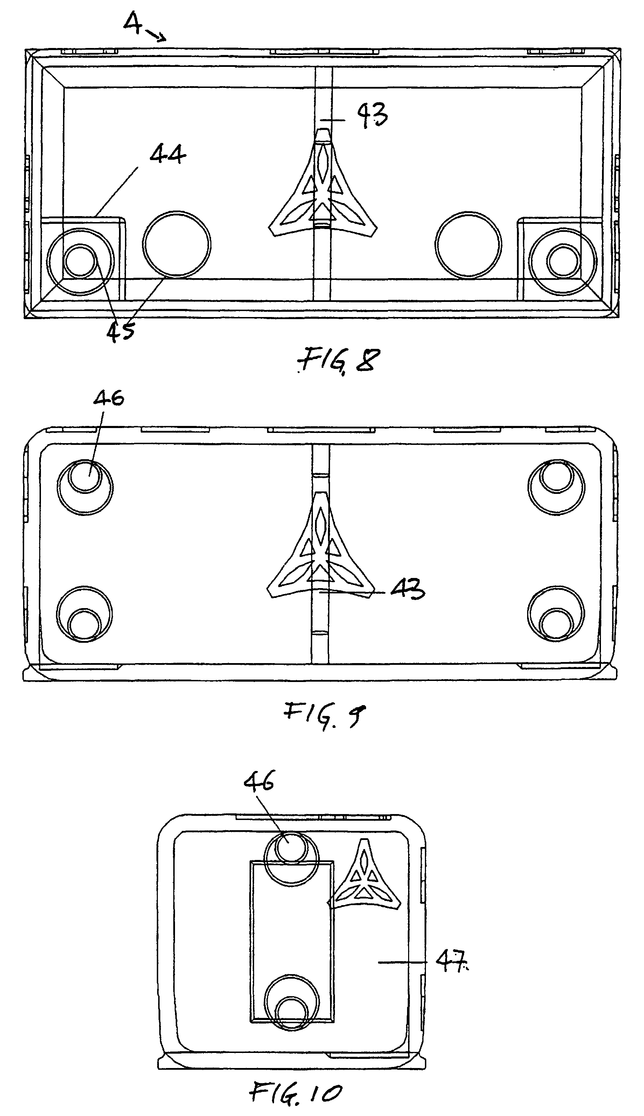

Figure 2 is a three-dimensional view of the mouth of the apparatus for the discharge water, downstream of the said separator means.

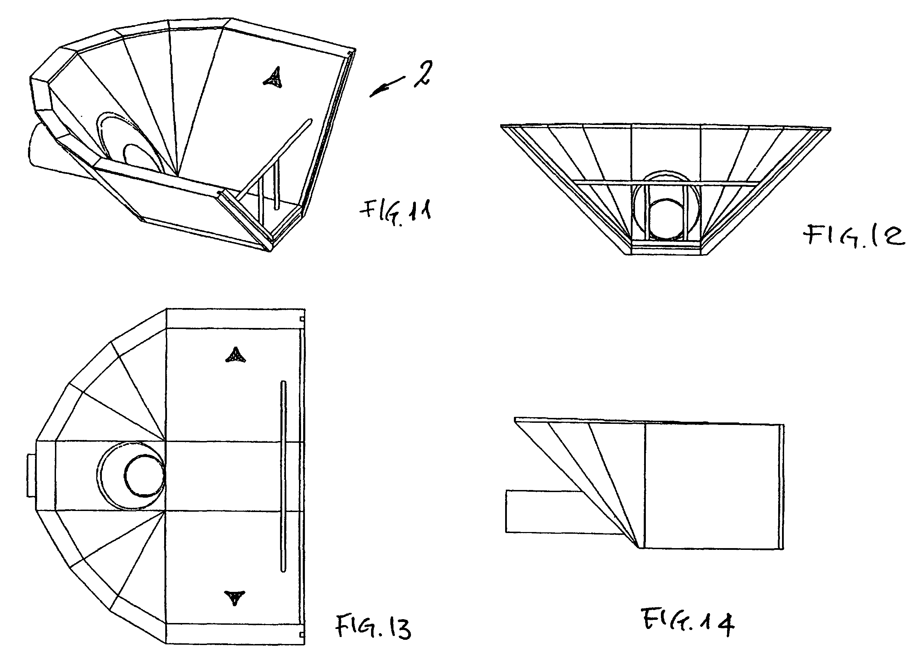

Figure 3 is a three-dimensional view of the said separator means.

Figure 4 is a three-dimensional view of a containment and separator (storage) tank.

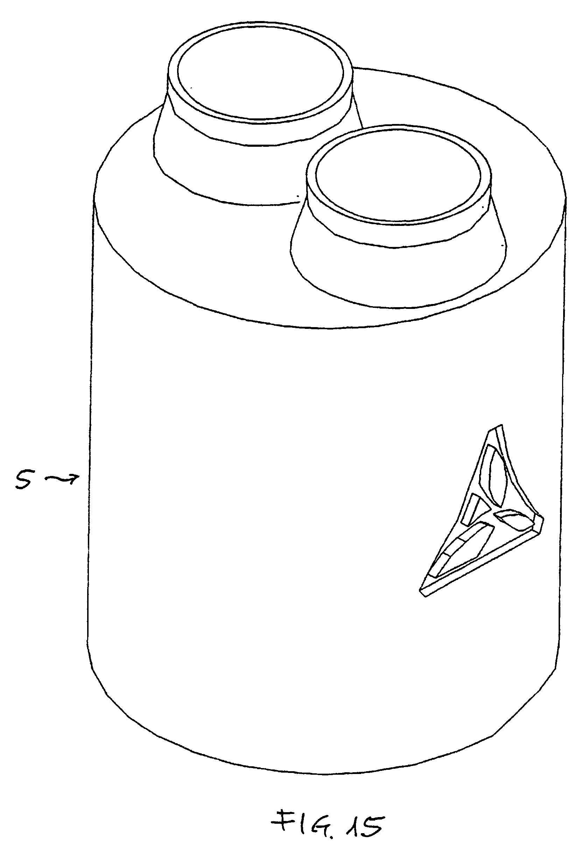

Figures 5 to 7 and 8 to 10 represent two different types of the said containment and storage tank with, respectively, two internal dividers or one internal divider.

Figures 11 to 14 are, respectively, a three-dimensional view, a front view, a plan view and a side view of the conveyor means of figure 2.

Figure 15 is a three-dimensional view of a separator means for materials different to water (e.g. deoiler).

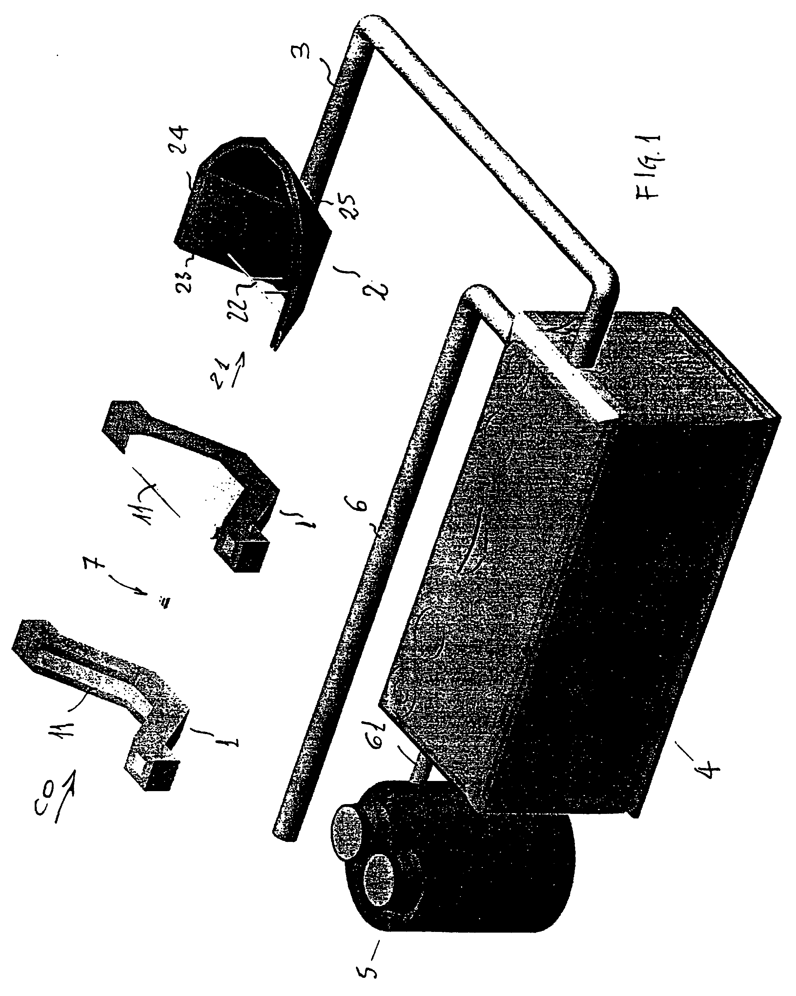

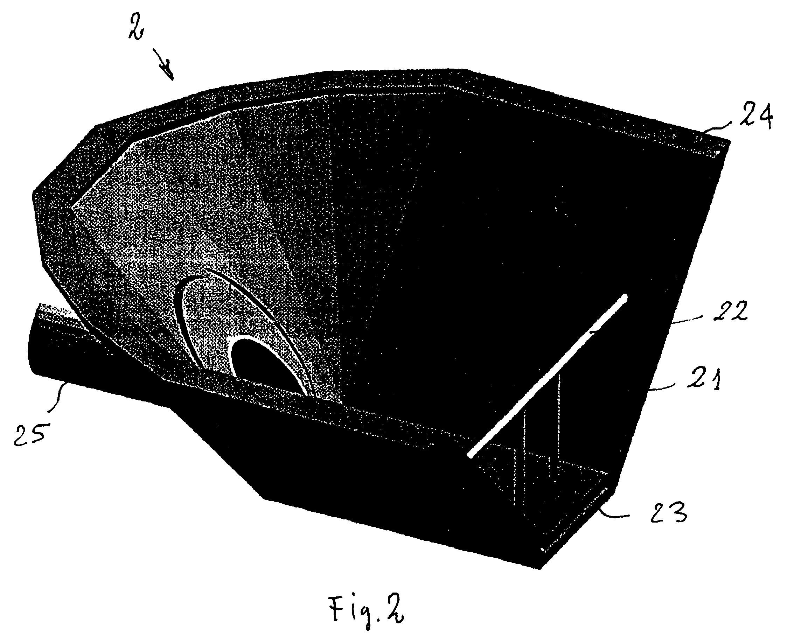

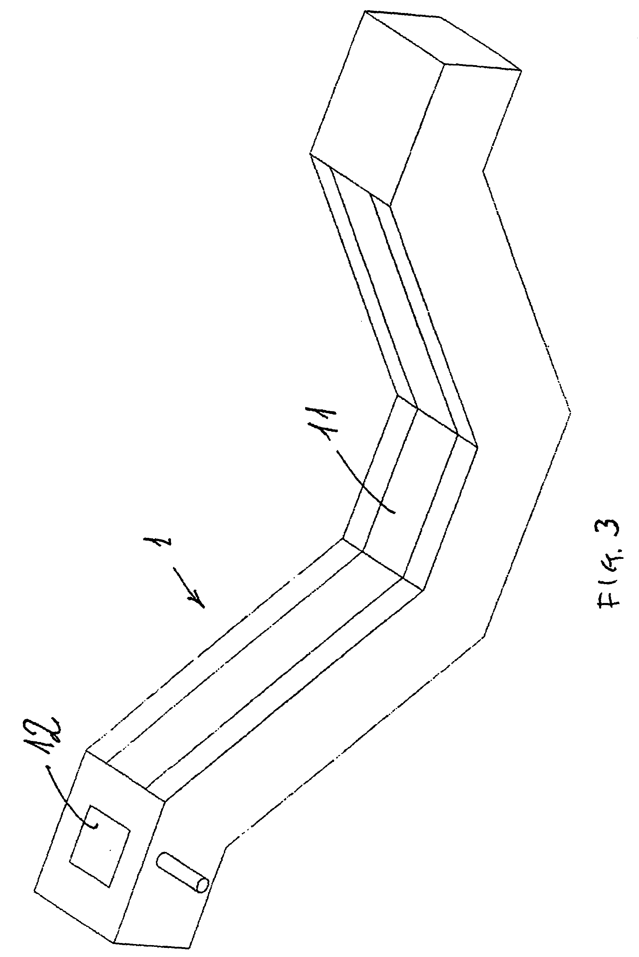

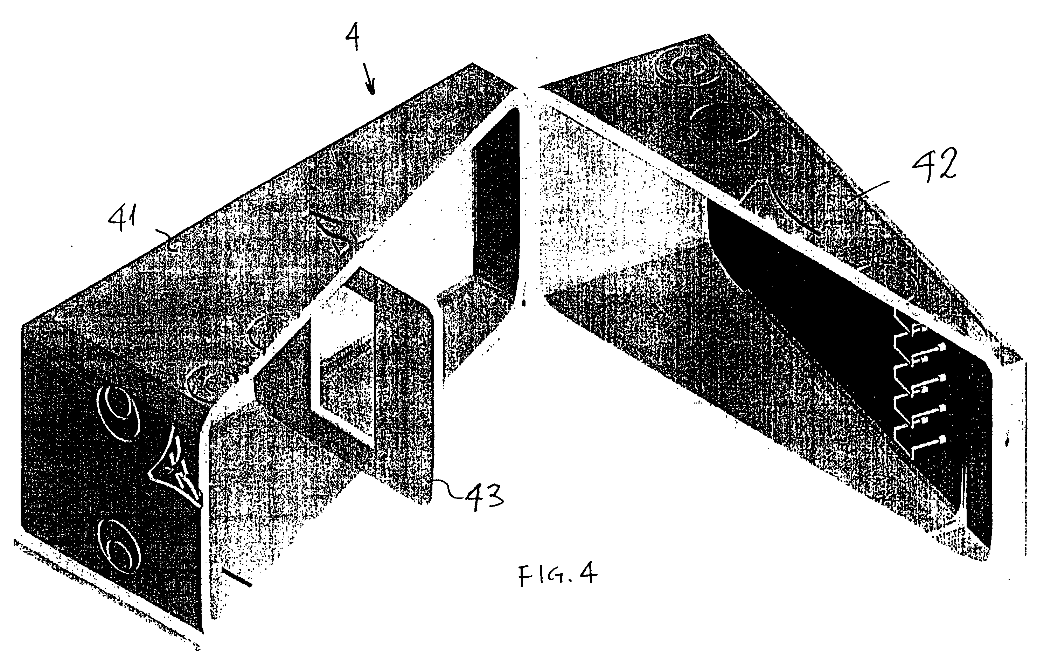

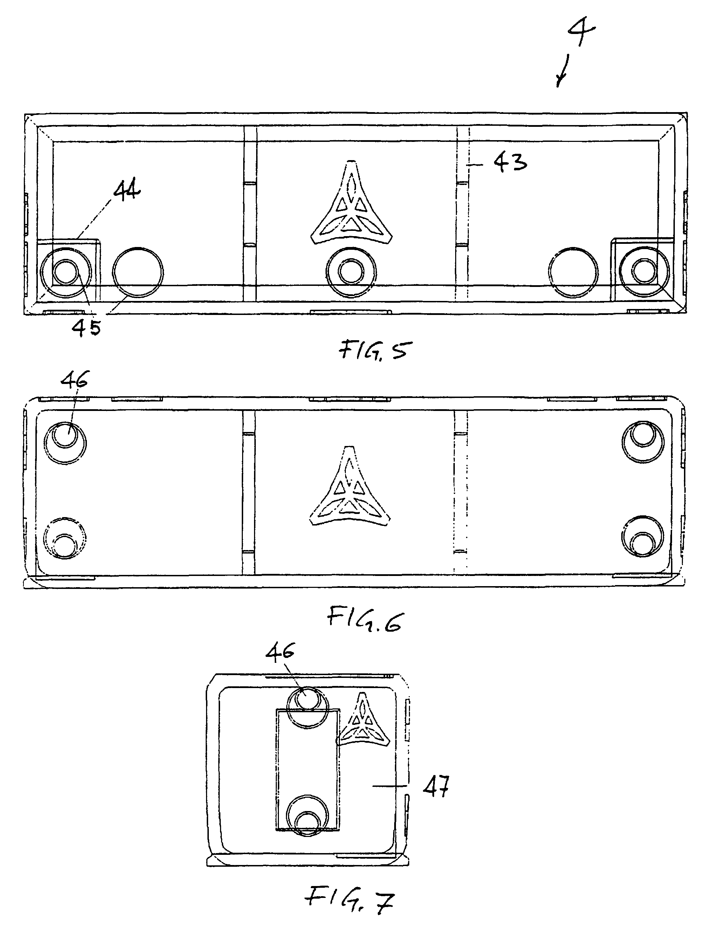

Going back to figure 1, along the discharge channel at the side of the road, the equipment includes at least two separator barriers (1) with a sensor between them (7) to detect the presence of pollutants.

Downstream of this set-up, there is a conveyor (2) with a shell-shaped mouth (21), an upper lip (24) and a grill to capture solid materials such as twigs and leaves (22). The front duct (23) is joined to the lower rear discharge duct (25) which leads to a confluence duct (3) and a storage unit, (4) made up of two box-shaped halves which can be closed and sealed (41, 42), with various openings for access, discharge and maintenance, internal sector dividers (43), a collecting well (44), recesses for multipurpose holes (45, 46) and structural and sedimentation sects (47) of a widely used design.

An overflow pipe (61) protrudes from the storage unit (4) to skim-off floating substances (oil etc.) into a collector unit at the side (5). There is also a discharge pipe (6) that is used to recover the clean water after the sedimentation process in the storage unit (4).

The solution described herein represents only one of the alternatives possible with the components described, and is to be considered neither limiting nor exclusive.

### Operation of the equipment

The system automatically chooses, according to certain parameters, which purification process to use or whether to hold the liquid which is particularly contaminated.

### Process

a. The normal purification process is carried out according to current standards and norms by using the following equipment:
   1. prefabricated conveyor (3), and collectors for the contaminated water (2) etc.
   2. prefabricated volumetric units made of multifunction modules for sedimentation (e.g. storage unit 4), measurement of the volume, removal of suspensions (e.g. 5), suction of the liquid to be purified or regulation of the outlet flow;
   3. deoiler according to various market standards (5).
      The procedure leads to 90-95% of the flowing water being treated and brought back to normal levels.
b. The emergency procedure uses the following equipment:
   1. sensors and monitors (7) calibrated according to current standards and norms and re-set according to periodic sampling, that send signals to the control unit to determine whether to give its consent on the basis of mathematical models;
   2. actuators such as separator units (1) which allow a continuous flow of the liquids, or remove the consent by physically blocking the flow with inflatable barriers (11) which are built into the unit (1).

The actuators (1), which are located in the hydraulic conveyors flush with the motorway ditch, are positioned at a certain distance from each other in order to reduce the amount of contamination, and come into operation according to different levels of emergency and by a remote command. The actuator (1) is made up of an inflatable barrier (11).

Going into detail, a trap has been designed (catch-spill-trap) that can raise a barrier in the ditch. They are placed at a pitch of 50 m and have the following characteristics:
the bladder is completely hidden and flexible (11) to avoid hostile foreign bodies in case of road accidents;
the bladder is located in a protective unit (11) which is perfectly stable under normal or operating conditions, and contains an electrovalve and a gas generator to inflate the bladder.

The density of the CAP depends on the dimensions of the ditch, and is positioned at the base of the ditch.

The following components are contained inside the internal chamber of the trap (separator):
a trapezoidal shell and a valve for the container in synthetic material, joined by a TIR-line, with the diaphragm (inflatable ball) inside made up of a bladder in warp-woven silicon-nylon, and with the desired shape according to the gas capacity.

On the head of the container (12) there is a chamber where the generator for the smokeless gas is located (He-H type in various mixtures, with a volume from 1 It. (1 litre=1000cc=1000 cu cm) to 1.5 It. (1,5 litre=1500cc=1500 cu cm) which is rapidly set-off in a predetermined time by a spark. The generator has a pressure gauge in bars, and has a self guaranteed capacity of up to 15 years.

Following an emergency detected by the sensor, the trap (11) has to be reloaded with gas and a new bladder.

Procedure (b) holds all the black waves, and gives the emergency services enough time to intervene and clean-up the pollutant that has been accidentally spilt.

The conveyor for the liquids is indicated by CO and can be made up of channels according to any requirements.

## Claims

1. An apparatus for checking and, if required, for recovering water that has been cleaned of road deposits, under both normal and emergency conditions, with a means for conveying the liquids (CO, 3, 6), a storage/sedimentation system (4) and, if required, floating separators (5); said apparatus further comprising flood or pollution sensing means and barrier means as shut-off means activated by said sensing means, to prevent normal drainage flow; **characterised by** the fact that,
i - said barrier means comprises at least two spaced apart barriers (1) in a form of a shut-off means, along a drain line to form a trap means (7);
ii - after said trap means, a collector device (2) is provided for conveying the liquids (CO, 3, 6) before said storage / sedimentation system (4);
iii - said shut-off means in each barrier (1) is a disappearing bladder (11):
iiii - said disappearing bladder (11) is flexible and hidden and contained in a hollow shell (1-11) and is inflatable in order to create the barrier and/or set-off by remote command (7);
iiiii - said remote command is part of a sensor means placed between the two of said spaced apart barriers (1,7).

## Patentansprüche

1. Eine Vorrichtung zum Kontrollieren und, falls erforderlich, zum Wiedergewinnen von Wasser, das von Straßenablagerungen gereinigt worden ist, sowohl unter normalen Bedingungen als auch im Notbetrieb, mit einem Mittel, um die Flüssigkeiten (CO, 3, 6) zu befördern, einem Lagerungs-/Sedimentations-System (4) und, falls erforderlich, schwimmenden Separatoren (5); besagte Vorrichtung umfasst des weiteren Überflutungs- oder Verschmutzungssensoren und Sperren als Schließmittel, die durch besagten Sensor aktiviert werden, um die normale Ablaufströmung zu verhindern; **gekennzeichnet dadurch, dass**
i - besagte Sperre mindestens zwei beabstandete Barrieren (1) i n Form eines Schließmittels umfasst, entlang einer Ablauflinie um einen Syphon (7) zu bilden;
ii - nach besagtem Syphon ist eine Kollektorvorrichtung (2) vorgesehen, um die Flüssigkeiten (CO, 3, 6) vor besagtes Lagerungs/Sedimentations-System (4) zu befördern;
iii - besagtes Schließmittel in jeder Sperre (1) ist ein versenkbarer Balg (11);
iiii - besagter versenkbarer Balg (11) ist flexibel und verborgen und in einem hohlen Mantel (1-11) enthalten und ist aufblasbar, um die Sperre herzustellen und/oder Ansatz durch Fernsteuerung (7);
iiiii - besagte Fernsteuerung ist Teil eines Sensormittels, das zwischen den beiden beabstandeten Barrieren (1,7) gelegen ist.

## Revendications

1. Un appareil pour contrôler et, en cas de besoin, pour récupérer de l'eau qui a été nettoyée de sédimentations de la route, aussi bien dans des conditions normales que d'urgence, avec un moyen pour transporter les liquides (CO, 3, 6), un système d'emmagasinage/sédimentation (4) et, en cas de besoin, des séparateurs flottants (5); ledit appareil comprenant en outre des moyens capteurs pour la détection d'inondations ou de pollution comme des moyens de barrière activés par lesdits moyens capteurs, pour empêcher la circulation de drainage normale; **caractérisé par le fait que**
i - ladite barrière comprend au moins deux barrières distancées (1) dans une forme d'un moyen de clôture, le long d'une ligne d'écoulement pour former un moyen de siphon (7);
ii - après ledit moyen de siphon, un dispositif collecteur (2) est pourvu pour transporter les liquides (CO, 3, 6) avant ledit système d'emmagasinage/sédimentation (4);
iii - ledit moyen de clôture dans chaque barrière (1) est un diaphragme escamotable (11);
iiii - ledit diaphragme escamotable (11) est flexible et caché et contenu dans une caisse creuse (1-11) et est gonflable afin de créer la barrière et/ou la compensation par commande à distance (7);
iiiii - ladite commande à distance fait partie d'un moyen capteur placé entre les deux barrières distancées (1,7).
